# EUROPEAN PATENT APPLICATION

(11) **EP 1 349 258 A1**
(43) Date of publication of application: **01.10.2003**
(21) Application number: 03006261.6
(22) Date of filing: 21.03.2003
(51) Int. Cl.: H02K 5/26

(54) **Connection structure for detachably fixing a support to an electric motor**

(30) Priority: 27.03.2002 IT MI20020638
(71) Applicant: Gutris, Giorgio, Barcelona (ES)
(72) Inventor: Gutris, Giorgio, Barcelona (ES)
(74) Representative: Modiano, Guido, Dr.-Ing.

(57) **Abstract**

An interlocking connection structure for anchoring one mechanical element to another, particularly a support or supporting base (6) to an electric motor (2) or the like, comprising a first wall portion (1) that is substantially trapezoidal, monolithic with the motor (2) and provided with two identical flat wings (3,3a) that protrude from opposite sides of the trapezoidal wall portion (1), so as to converge symmetrically, and by a second trapezoidal wall portion (7), which is monolithic with the base (6) and has, at its opposite sides, wings (8,8a) that are inclined and converge symmetrically, the dimensions of the wings (8,8a), their convergence and the area of the wall portion (7) being provided so as to allow the wings (8,8a) of the base (6) to be inserted between the wings (3,3a) of the wall portion (1), for interlocking coupling, substantially of the truncated pyramid type or dovetail, between the base (6) and the motor (2).

## Description

The present invention relates to a metallic and/or plastic structure that is particularly adapted for providing a connection, which is detachable by way of the interlocking of doubly converging elements, between a supporting base and an electric motor or similar component.

It is known that the problem of resting or connecting an electric motor to a surface usually requires spacing the motor axis from such surface in order to allow the proper operation of the motor.

In this case, an element usually known as a base is interposed between the motor and the surface whereto it is to be fixed; such base mates with such surface at one end, which is generally provided with the elements for fixing to the surface, and mates motor whereto it is fixed at the other end.

Currently, only holes for screws or bolts are usually provided in order to fix the base to the surface, whereas various structures have been proposed for fixing the base to the casing of the electric motor; in some cases, these structures are very complicated and are constituted by a plurality of pieces of metal or plastics, which are joined by means of welds or several bolts, which entail a number of interventions on both the elements, with the result of entailing high production costs due to the amount of material required and to the work to be performed on said parts, and due to the labor required in order to mate and rigidly couple the two elements (welds, bolts, et cetera).

It is also known that there is a current trend toward manufacturing plastic parts by injection molding or ordinary molding, and therefore there is a growing need to devise parts that can be manufactured with techniques that allow extraction from the molds; i.e., the parts must be produced without undercuts and without the need, in the equipment, for lateral sliding elements, which generate flash and inaccuracies.

Accordingly, the aim of the present invention is to provide a structure for connecting two mechanical elements, such as for example an electric motor and a replaceable base thereof, which is conceived and structured so as to obviate the drawbacks of current structures, but above all can be structurally simple thereby requiring a limited use of labor for coupling the elements and can be manufactured entirely, on both elements, in a single molding or injection-molding operation, so as to be particularly economical, with the additional advantage of allowing to store the motor without the supporting base and of then using it with different bases.

An object of the invention is to allow the easy and rapid disassembly of a base from a motor when the motor must use another base that also has the engagement structure according to the present invention.

Another object is to provide an interlocking connection structure with detachable elements that is structured so as to allow the stable locking of the two elements by friction or adhesion between the corresponding mating surfaces or by means of screws or the like, in order to prevent any sliding of one element with respect to the other in particular operating conditions of the motor.

This aim and these and other objects that will become better apparent hereinafter are achieved by an interlocking connection structure for detachably anchoring one mechanical element to another, particularly a support or supporting base to an electric motor or the like, according to the present invention, characterized in that it comprises a first wall portion that is substantially trapezoidal, is monolithic with said motor and is provided with two identical flat wings that protrude from the opposite sides, which are inclined at an angle γ, of said trapezoidal wall portion, so as to converge symmetrically, and second trapezoidal wall portion, which is monolithic with said base and likewise has, at its opposite sides, which converge with an angle γ, wings that are inclined and converge symmetrically, the dimensions of said wings, their convergence and the area of said wall portion that is monolithic with said supporting base being provided so as to allow the wings of said base to be inserted between the wings of the wall portion that is monolithic with the motor, thus providing an interlocking coupling, substantially of the truncated pyramid type, between the base and the motor.

Furthermore, also according to the invention, the stability of the truncated-pyramid interlocking position can be ensured by means of a locking element, such as a screw, bolt or the like, which is arranged in such a position as to prevent the sliding of the mutually engaged parts in the opposite direction with respect to the insertion direction if the friction coefficient is not sufficient.

Further characteristics and advantages of the present invention will become better apparent from the following detailed description, given with reference to the accompanying drawings, provided only by way of non-limitative example, wherein:
Figures 1 and 2 show in a perspective view, and in a separate position, a connection structure provided according to the invention and constituted by a supporting base that can be engaged detachably and in an interlocking fashion with the casing of a low-power electric motor;
Figure 1a is a view showing the engagement element alone, separated from the casing of the motor of Figure 1;
Figure 2a shows instead, merely by way of example, the connection element alone, monolithically coupled to a base, which is designed to be inserted with an interlocking action in the connection element that is monolithic with the motor of Figure 1; and
Figure 3 is a side view showing, again merely by way of example, a supporting base with divaricated legs, detachably engaged to one of the half-shells that enclose the motor by means of the interlocking engagement structure shown in the preceding figures.

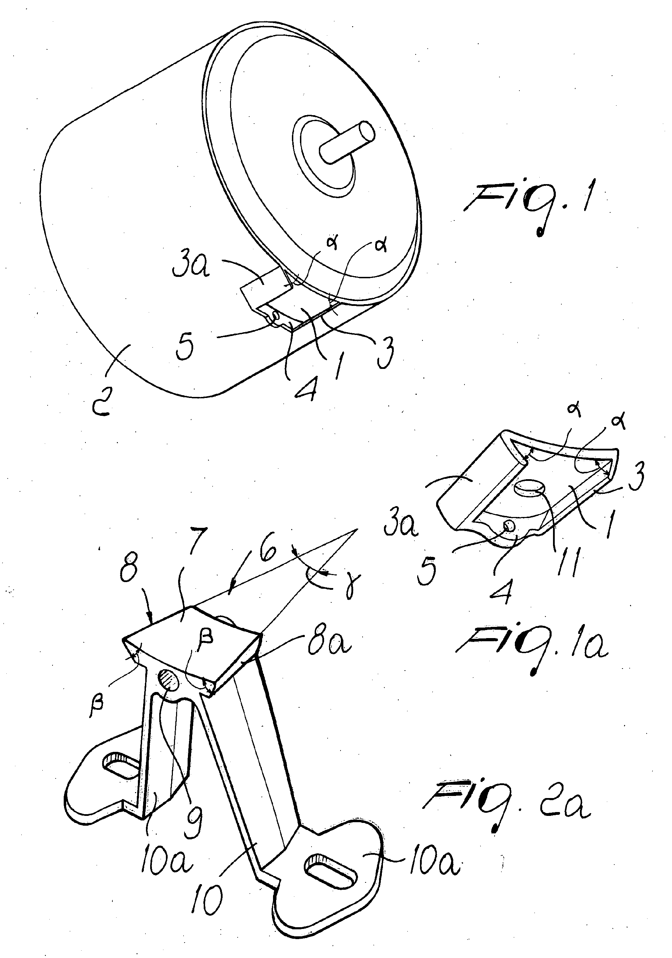

With reference to the figures, particularly to Figures 1 and 2, the connection structure according to the present invention is substantially constituted by two elements or mechanical parts that can be engaged one another by way of an interlocking action that is substantially of the truncated-pyramid type.

More particularly, the connection structure is constituted by a portion of a wall or surface 1 (Figure 1) that is substantially trapezoidal and can be part of the casing 2 of a low-power electric motor, as shown in Figure 1, or can be provided separately (Figure 1a); on the opposite sides of said wall, which are inclined at the angle γ, i.e., between the longer and shorter parallel sides, there are two identical rectangular wings 3-3a, which are flat and inclined symmetrically toward each other by an identical angle α.

The ends of the wings 3 and 3a that are directed toward the shorter side of the trapezoidal wall or surface 1 are preferably connected by a connecting rib 4, in which it is possible to provide at least one through hole 5 for a self-tapping locking screw or other means, as will become better apparent hereinafter.

The assembly formed by the trapezoidal wall or surface 1 and by the corresponding wings 3-3a accordingly constitutes one of the elements for detachable interlocking engagement; the other element is constituted by a supporting base, generally designated by the reference numeral 6 in Figures 2-2a-3, which is constituted by a second wall portion or plate 7 that is trapezoidal and has such a thickness as to have, at its opposite inclined sides, which converge at the angle γ, two rectangular wings 8-8a (Figures 2-2a) whose dimensions and inclination are such that they can be inserted with an interlocking action between the wings 3-3a of the engagement element that is monolithic with the body of the motor 2; more specifically, the surfaces of the opposite wings 8-8a form an angle β with respect to the base plate 7, as shown in Figures 2-2a, which is substantially identical to the angles α of the first connecting element.

Accordingly, in order to connect the base 6 to the body of the electric motor 1 it is sufficient to insert the part 7 (the plate with doubly inclined wings 8-8a) between the wings 3-3a, which are also inclined, of the engagement element 1, and then push the base 6 until it interlocks in the corresponding pair of wings of the two elements 1 and 7 without making contact with the rib 4, so as to make the walls 1 and 7 adhere to each other.

Furthermore, the plate-like wall 7 of the base element 6 can be crossed, parallel to the flat surface of said plate, by a hole 9, so as to allow, when required, the stable locking of the interlocking connection of the elements 1 and 7 by inserting a self-tapping screw or a bolt with a nut in the holes 5 and 9, which are coaxial.

As mentioned, the structure can be manufactured monolithically in the same operation in which the parts to be coupled are molded or injection-molded, since the wings and the other elements that compose the structure can be formed entirely by injection molding or ordinary molding without requiring lateral sliding elements, since their inclinations allow extraction from the mold monolithically with each one of the two parts to be coupled.

The manufacture of said parts requires a minimal quantity of material and practically no additional labor; furthermore, the fact that the two elements 1 and 6 of the interlocking coupling are an integral part of the elements to be monolithically coupled, constituted by the motor and its base, is non-limitative for the invention. Said elements of the interlocking coupling can be provided separately, as configured in Figures 1 and 2a, and fixed to the elements to be monolithically coupled by way of the most disparate known coupling means, such as for example the hole 11, which is shown only in said Figure 1a.

Also according to the invention, anchoring elements of various shapes and dimensions can be associated, and/or formed monolithically, with the interlocking connection element, designated by the reference numeral 6 in the figures, which constitutes the supporting base of the other element, for example the motor 2 of Figure 1; thus, for example, two divaricated legs 10 with a supporting foot 10a can be associated with the base of the trapezoidal plate 7 for fixing to supporting walls having various shapes and distances with respect to the working position that the motor must have.

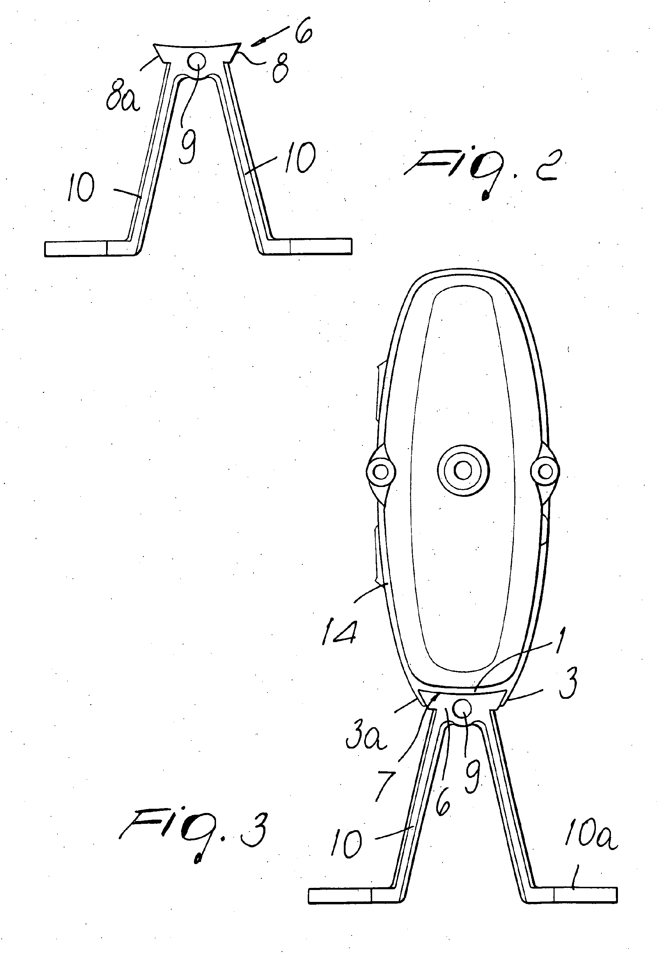

Likewise, the connecting element 1 can be associated with the shell or casing 14 (Figure 3) that encloses an electric motor used in particular environments and with supporting bases whose shapes and dimensions can vary according to requirements. Furthermore, also according to the invention, it is also possible to stably lock the interlocking coupling between the elements 1 and 7 by snap engagement of raised means, protrusions, or rough regions that protrude from the mutually contacting faces of the trapezoidal walls 1 and 7.

From the above description and from the illustrations, it is evident that further structurally and functionally equivalent modifications can be applied in practice to the connection structure described and illustrated, without thereby abandoning the scope as defined in the appended claims.

The disclosures in Italian Patent Application No. MI2002A000638 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An interlocking connection structure for detachably anchoring one mechanical element to another, particularly a supporting base (6) to an electric motor (2) or the like, **characterized in that** it comprises a first wall portion (1) that is substantially trapezoidal, is monolithic with said motor (2) and is provided with two identical flat wings (3, 3a) that protrude from the opposite inclined sides of said trapezoidal wall portion (1), so as to converge symmetrically, and a second trapezoidal wall portion (7), which is monolithic with said base (6) and has, at its opposite sides, wings (8, 8a) that are inclined and converge symmetrically, the dimensions of said wings (8, 8a), their convergence and the area of said wall portion (7) that is monolithic with said supporting base (6) being provided so as to allow the wings (8, 8a) of said base (6) to be inserted between the wings (3, 3a) of the wall portion (1) that is monolithic with the motor (2), thus providing an interlocking coupling, substantially of the truncated pyramid type, between the base (6) and the motor (2).

2. The connection structure according to claim 1, **characterized in that** said two interlocking connection elements (1, 7), specifically said portion of trapezoidal wall (1) and the corresponding converging wings (3, 3a) and said trapezoidal plate (7) with the corresponding converging wings (8, 8a), can be provided separately from the mechanical elements (2, 6) to be monolithically coupled and can then be anchored to said mechanical elements (2, 6) by way of known coupling means (11) when required.

3. The connection structure according to claims 1 and 2, **characterized in that** it comprises an interlocking coupling with stability ensured by the mutual friction of the mating surfaces of the two elements (1, 7) that are in contact.

4. The connection structure according to claims 1 and 2, **characterized in that** it comprises a truncated-pyramid interlocking coupling with a stability between said two mechanical elements (1, 7) to be monolithically coupled ensured by at least one through hole (5, 9), which is formed in both of said portions of trapezoidal walls (1, 7) parallel to the mating surfaces of said walls (1, 7), and by a self-tapping screw or by a bolt with a nut or the like.

5. The connection structure according to one or more of the preceding claims, **characterized in that** it comprises a truncated-pyramid interlocking engagement between said two mechanical elements (1, 7) with stability provided by snap action or the like, by way of the engagement of protrusions and/or rough regions that protrude from the contacting faces of said trapezoidal walls (1, 7).

6. The connection structure according to one or more of the preceding claims, **characterized in that** its components (1, 7) are substantially inverted one with respect to the other.
